# EUROPÄISCHE PATENTSCHRIFT

(11) **EP 3 584 093 B1**
(45) Veröffentlichungstag und Bekanntmachung des Hinweises auf die Patenterteilung: **16.12.2020**
(21) Anmeldenummer: 19173973.9
(22) Anmeldetag: 13.05.2019
(51) Int. Cl.: B60C 11/12

(54) **FAHRZEUGLUFTREIFEN**
PNEUMATIC TYRE
PNEUMATIQUES DE VÉHICULE

(30) Priorität: 18.06.2018 DE 102018209742
(43) Veröffentlichungstag der Anmeldung: 25.12.2019
(73) Patentinhaber: Continental Reifen Deutschland GmbH, 30165 Hannover (DE)
(72) Erfinder: Özüduru, Ahmet, 30165 Hannover (DE); Vennebörger, Martin, 30165 Hannover (DE); Hoppe, Nicholas, 30165 Hannover (DE)
(74) Vertreter: Finger, Karsten

(56) Entgegenhaltungen:
- EP-A2- 0 342 908
- DE-A1-102009 026 355
- US-B1- 6 484 772
- US-B2- 9 139 048
- US-B2- 9 827 812

## Beschreibung

Die Erfindung betrifft einen Fahrzeugluftreifen mit einem Laufstreifen, welcher Profilelemente aufweist, wobei zumindest ein Profilelement mit einem Feineinschnitt versehen ist, wobei der Feineinschnitt eine Längserstreckung aufweist, welche sich zwischen den beiden Kanten des Feineinschnittes bemisst und wobei der Feineinschnitt sich über seine Tiefenerstreckung in radialer Richtung von der Laufstreifenperipherie ins Profilelementinnere bis zum Feineinschnittgrund erstreckt, wobei zur Vergleichmäßigung der Profilsteifigkeit über die Lebensdauer des Fahrzeugluftreifens der Feineinschnitt im mittigen Bereich seiner Längserstreckung eine stoffschlüssige Anbindung an das den Feineinschnitt umgebende Kautschukmaterial aufweist.

Ein derart ausgeführter Fahrzeugluftreifen ist aus der US 6 484 772 B1 bekannt. Ferner ist aus der DE 10 2009 026 355 A1 ist ein Fahrzeugreifen mit einem Feineinschnitte aufweisenden Laufstreifenprofil bekannt, wobei die Feineinschnitte senkrecht zur Ebene der radialen Feineinschnitterstreckung stoffschlüssige Anbindungen aufweisen, welche einem Schließen des Feineinschnittes im Reifenlatsch entgegenwirken.

Es ist bei Laufstreifenprofilen von Winterreifen bzw. Ganzjahresreifen üblich, Feineinschnitte innerhalb der erhabenen Profilelemente vorzusehen. Feineinschnitte sind Einschnitte, welche innerhalb der Profilelemente wie Profilbänder oder Profilblöcke mit einer Breite von 0,3 mm bis 2,0 mm angeordnet sind. Beispielsweise werden in PKW-Reifen häufig Feineinschnittbreiten von etwa 0,6 mm und in Van-Reifen von etwa 1,0 mm verwirklicht. Die Feineinschnitte dienen bei winterlichen Bedingungen u.a. dazu, Schnee aufzunehmen, um die Schnee/Schnee - Reibung zu erhöhen und derart eine bessere Haftung des Reifens auf winterlicher Fahrbahn zu ermöglichen. Zudem werden eine Vielzahl an Kanten zur Verfügung gestellt, welche in die winterliche Fahrbahn eingreifen können.

Es gibt eine Vielzahl an bekannten Ausbildungen von Feineinschnitten. Am bekanntesten ist eine Ausbildung, bei der der Feineinschnitt in Profilaufsicht gerade oder sinusförmig ausgebildet ist und in seinem Tiefenverlauf innerhalb des Profilblockes unverändert ist (2-dimensionaler Feineinschnitt).

Es sind aber auch verschiedenste Feineinschnitte bekannt, deren Ausbildung sich mit dem Tiefenverlauf innerhalb des Profilblockes ändert, z.B. eine veränderliche Amplitude aufweisen (3-dimensionaler Feineinschnitt).

Ein Feineinschnitt reicht entweder von einer Profilelementwand zur anderen Profilelementwand und quert das Profilelement vollständig oder quert das Profilelement nicht vollständig und ist innerhalb des Profilelementes an seinen Kanten angebunden.

Da sich während der Benutzung eines Reifens über dessen Haltbarkeitsdauer die Profiltiefe im Laufstreifen deutlich verringert, ist eine Änderung der Profilsteifigkeit, insbesondere der Steifigkeit der einzelnen Profilelemente, unumgänglich. Bei den üblichen Feineinschnittausführungen folgt die Änderung der Profilelementsteifigkeit einer eher streng monotonen Funktion. Am geringsten ist die Steifigkeit in Profilelementen mit gerade ausgeführten Feineinschnitten im unbefahrenen Zustand des Reifens und nimmt mit Abrieb der Profilelemente zu.

Der Erfindung liegt die Aufgabe zu Grunde, die Performance eines insbesondere für einen Winter bzw. Ganzjahreseinsatz vorgesehenen Reifens zu verbessern, insbesondere sollen die Eigenschaften des Reifens auf Schnee sowie auf trockenen Fahrbahnen über dessen Lebensdauer möglichst ausgewogen und gleichermaßen gut sein.

Gelöst wird die gestellte Aufgabe erfindungsgemäß dadurch, dass sich diese stoffschlüssige Anbindung von der Laufstreifenperipherie bis in eine Tiefe erstreckt, welche wenigstens 1 mm oberhalb des Feineinschnittgrundes liegt und dass sich die Länge der Anbindung über deren Tiefenerstreckung verringert.

Erfindungsgemäß ist der Feineinschnitt im Bereich der Anbindung über seine Längserstreckung kein durchgehender Spalt, sondern ist durch die mittig angeordnete Anbindung in drei Abschnitte gegliedert: Spalt - Anbindung - Spalt. Diese Dreiteilung über die Längserstreckung des Feineinschnittes reicht nicht bis auf den Feineinschnittgrund, sondern die Anbindung endet mindestens 1 mm oberhalb des Feineinschnittgrundes. Die Anbindung besteht bevorzugt aus der Kautschukmischung des Profilelementes und ist mit dieser stoffschlüssig verbunden. Die Anbindung, welche bei voller Profiltiefe durch ihre größte Breite am wirksamsten ausbildet ist, bewirkt, dass im unbefahrenen Zustand die größte Versteifung des Profilelementes erhalten ist und dem in diesem Zustand am wenigsten steife Profilelement entgegenwirkt. Bei abnehmender Profiltiefe mit zunehmendem Abrieb des Laufstreifens nimmt die Steifigkeit der Profilelemente zu, durch die in gleichem Maße schmaler werdende Anbindung nimmt der Steifigkeitseinfluss durch die Anbindung ab, so dass eine über die Lebensdauer des Reifens gleichbleibende Steifigkeit der Profilelemente erhalten ist. Hierdurch sind die Eigenschaften des Reifens auf Schnee sowie auf trockener Fahrbahn über dessen Lebensdauer möglichst ausgewogen und gleichermaßen gut. Zudem ist die Möglichkeit gegeben, mehr Feineinschnitte als bisher üblich in einem Profilelement anzuordnen, ohne dass das Profilelement zu weich wird.

Zweckmäßig ist es, wenn die Länge der stoffschlüssigen Anbindung an der Laufstreifenperipherie maximal ½ x der Längserstreckung des Feineinschnittes, vorzugsweise etwa 1/3 x der Längserstreckung des Feineinschnittes entspricht. Diese Länge der Anbindung hat sich für den Erhalt einer gleichbleibenden Steifigkeit des Profilelementes über dessen Lebensdauer als besonders geeignet erwiesen.

Die stoffschlüssige Anbindung ist vorzugsweise mittig in der Längserstreckung des Feineinschnittes angeordnet, derart, dass der Spalt links von der Anbindung etwa die gleiche Länge wie der Spalt rechts von der Anbindung aufweist.

Zweckmäßig ist es, wenn die stoffschlüssige Anbindung - in Aufsicht auf den durch seine Längs- und Tiefenerstreckung aufgespannten Feineinschnitt - v-förmig, halbkreisförmig, halb-elliptisch oder trapezförmig ist. Diese geometrischen Formen eignen sich besonders, um eine gleichmäßige Profilelementsteifigkeit über dessen Lebensdauer einzustellen.

In einer bestimmten Ausführung der Erfindung ist der Feineinschnitt ein 2-D-Feineinschnitt und ist in Aufsicht ein gerader Feineinschnitt oder ein Feineinschnitt in Wellen-, Treppen- oder Zick-Zack-Form.

In einer alternativen Ausführung der Erfindung ist der Feineinschnitt ein 3-D-Feineinschnitt und ist in Aufsicht ein gerader Feineinschnitt oder ein Feineinschnitt in Wellen-, Treppen- oder Zick-Zack-Form.

Weitere Merkmale, Vorteile und Einzelheiten der Erfindung werden nun anhand der Zeichnungen, die ein schematisches Ausführungsbeispiel darstellen, näher beschrieben. Dabei zeigen die
Fig. 1a eine dreidimensionale Ansicht eines Profilelementes des Laufstreifens eines erfindungsgemäßen Fahrzeugluftreifens mit einem Feineinschnitt im unbefahrenen Zustand;
Fig. 1b eine dreidimensionale Ansicht des Profilelementes der Fig. la mit einem Feineinschnitt im angefahrenen Zustand;
Fig. 2a einen Schnitt durch den Profilblock der Fig. 1a entlang des Schnittes A-A;
Fig. 2b einen Schnitt durch den Profilblock der Fig. 1b entlang des Schnittes B-B.

Die Erfindung befasst sich mit einer besonderen Ausführung von Feineinschnitten in Profilelementen von Laufstreifen, wie Profilblöcke oder Profilrippen, in Fahrzeugluftreifen, insbesondere Winterreifen oder Ganzjahresreifen für Personenkraftwagen.

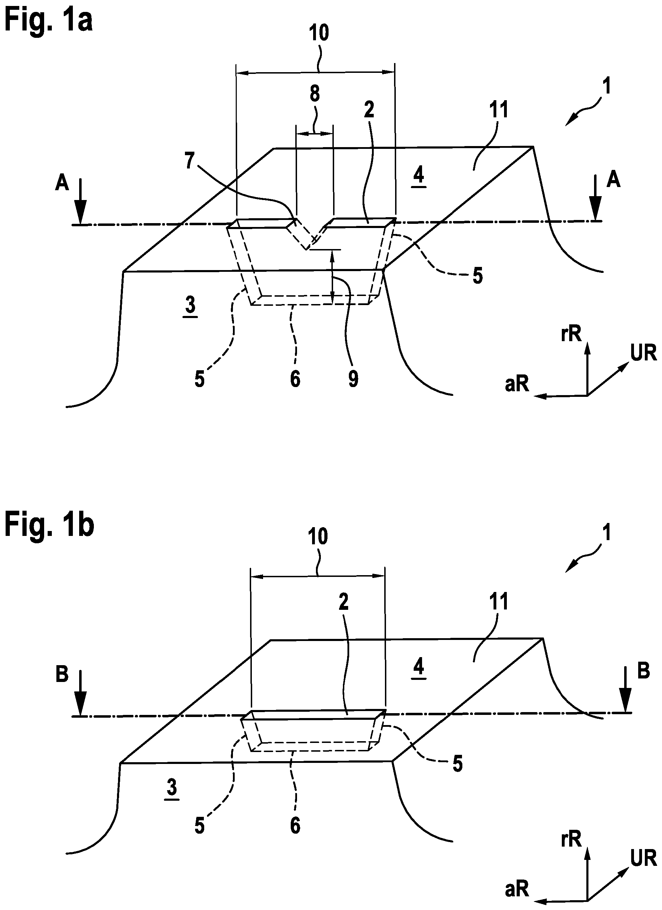

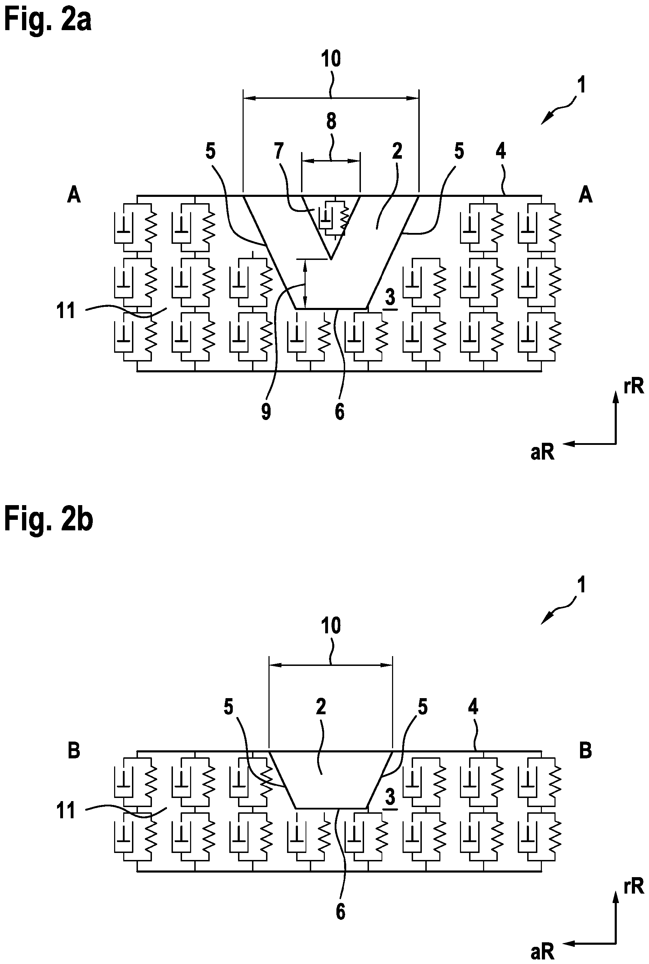

Die Fig. 1a und Fig. 1b zeigen beispielhaft eine dreidimensionale Ansicht eines Profilelementes für einen Laufstreifen in der Form eines Profilblockes 1 mit einem in Aufsicht auf den Profilblock 1 als Gerade ausgebildeten Feineinschnitt 2. Die Fig. 1a zeigt diesen im unbefahrenen Zustand und die Fig. 1b im angefahrenen Zustand, in dem die Anbindung 7 bereits abgerieben ist. Die Fig. 2a und 2b zeigen Längsschnitte dieses Feineinschnittes 2, im Schnitt A-A im unbefahrenen Zustand und im Schnitt B-B im angefahrenen Zustand. Zudem dienen die Fig. 2a und 2b zur Erklärung der Wirkweise der über den Abrieb des Profilblockes erhaltenen gleichen Steifigkeit über ein Federmodell.

Der Feineinschnitt 2 verläuft in radialer Richtung rR des Reifens von der Profilblockperipherie 4 in das Profilblockinnere 3 hinein.

Der Feineinschnitt 2 weist eine Längserstreckung mit einer definierten Länge 10 auf, welche sich zwischen den beiden Kanten des Feineinschnittes 5 bemisst. Die Kanten des Feineinschnittes 5 verlaufen derart zueinander, dass die Länge 10 des Feineinschnittes über seine Tiefenerstreckung in radialer Richtung rR abnimmt und im Feineinschnittgrund 6 endet. Zur Vergleichmäßigung der Profilsteifigkeit über die Lebensdauer des Fahrzeugluftreifens weist der Feineinschnitt 2 im mittigen Bereich seiner Längserstreckung eine stoffschlüssige Anbindung 7 an das den Feineinschnitt 2 umgebende Kautschukmaterial 11 auf. Diese stoffschlüssige Anbindung 7 erstreckt sich von der Profilblockperipherie 4 bis in eine Tiefe, welche wenigstens 1 mm oberhalb des Feineinschnittgrundes 6 liegt und weist dementsprechend einen Abstand 9 zum Feineinschnittgrund 6 von wenigstens 1 mm auf. Zudem verringert sich die Länge 8 der stoffschlüssigen Anbindung über deren Tiefenerstreckung. Die Länge 8 der stoffschlüssigen Anbindung an der Profilblockperipherie 4 ist etwa 1/3 x der Länge 10 des Feineinschnittes an der Profilblockperipherie 4. Die Anbindung 7 ist - im Schnitt - v-förmig ausgestaltet.
Über ein Federmodell, welches in den Längsschnitten in den Fig. 2a und 2b dargestellt sind, lässt sich die Vergleichmäßigung der Profilsteifigkeit über die Lebensdauer des Reifens anschaulich erläutern:
Bei Feineinschnitten des Standes der Technik OHNE Anbindung ist durch wenige, parallel geschaltete Federn (in axialer Richtung geschaltete Federn) an der Profilblockperipherie eine geringe Steifigkeit aufzufinden. Nach Abrieb des oberen Teils nimmt der Anteil der in Reihe geschalteten Federn ab (in radialer Richtung geschaltete Federn), wodurch das Profil steifer wird. Gleichzeitig nimmt der Anteil an parallel geschalteten Federn zu, wodurch sich die Profilsteifigkeit verstärkt.

Nach erfindungsgemäßer Ausführung weist der Feineinschnitt 2 im Bereich der Profilblockperipherie 4 eine stoffschlüssige Anbindung auf und stützt somit die aus mehreren parallel angeordneten Feineinschnitten resultierenden Blockelemente in Bezug auf ihre (Biege-)Steifigkeit. Die Tiefe der Blockelemente nimmt mit abnehmender Profiltiefe des Reifens ab, im gleichen Maß nimmt dadurch die Steifigkeit der Blockelemente zu. Ab einer bestimmten Profiltiefe ist die stoffschlüssige Anbindung abgerieben und die zusätzliche Erhöhung der Steifigkeit fällt weg. Dadurch wird der Steifigkeitszunahme, die durch die Profiltiefenreduktion entsteht, entgegengewirkt und das Profil weist eine konstantere Steifigkeit über das Reifenleben aus.

### Bezugszeichenliste

- 1: Profilblock / Profilelement
- 2: Feineinschnitt
- 3: Profilblockinneres / Profilelementinneres
- 4: Profilblockperipherie / Laufstreifenperipherie
- 5: Kante des Feineinschnittes
- 6: Feineinschnittgrund
- 7: Anbindung
- 8: Länge der Anbindung
- 9: Abstand
- 10: Länge des Feineinschnittes
- 11: Kautschukmaterial
- rR: Radiale Richtung
- UR: Umfangsrichtung
- aR: axiale Richtung

## Patentansprüche

1. Fahrzeugluftreifen mit einem Laufstreifen, welcher Profilelemente (1) aufweist, wobei zumindest ein Profilelement (1) mit einem Feineinschnitt (2) versehen ist, wobei der Feineinschnitt (2) eine Längserstreckung mit einer definierten Länge (10) aufweist, welche sich zwischen den beiden Kanten (5) des Feineinschnittes (2) bemisst und wobei der Feineinschnitt (2) sich über seine Tiefenerstreckung in radialer Richtung (r) von der Laufstreifenperipherie (4) ins Profilelementinnere (3) bis zum Feineinschnittgrund (6) erstreckt, wobei zur Vergleichmäßigung der Profilsteifigkeit über die Lebensdauer des Fahrzeugluftreifens der Feineinschnitt (2) im mittigen Bereich seiner Längserstreckung eine stoffschlüssige Anbindung (7) an das den Feineinschnitt (2) umgebende Kautschukmaterial aufweist,
**dadurch gekennzeichnet, dass** sich diese stoffschlüssige Anbindung (7) von der Laufstreifenperipherie (4) bis in eine Tiefe erstreckt, welche wenigstens 1 mm oberhalb des Feineinschnittgrundes liegt und dass sich die Länge der stoffschlüssigen Anbindung (8) über deren Tiefenerstreckung verringert.

2. Fahrzeugluftreifen nach Anspruch 1, **dadurch gekennzeichnet, dass** die Länge der stoffschlüssigen Anbindung (8) an der Laufstreifenperipherie (4) maximal ½ x Länge des Feineinschnittes (10), vorzugsweise etwa 1/3 x Länge des Feineinschnittes (10) ist.

3. Fahrzeugluftreifen nach einem der vorangehenden Ansprüche, **dadurch gekennzeichnet, dass** die stoffschlüssige Anbindung (7) - in Aufsicht auf den durch seine Längs- und Tiefenerstreckung aufgespannten Feineinschnitt (2) - v-förmig, halbkreisförmig oder trapezförmig ist.

4. Fahrzeugluftreifen nach einem der vorangehenden Ansprüche, **dadurch gekennzeichnet, dass** der Feineinschnitt (2) ein 2-D-Feineinschnitt ist und in Aufsicht ein gerader Feineinschnitt oder ein Feineinschnitt in Wellen-, Treppen- oder Zick-Zack-Form ist.

5. Fahrzeugluftreifen nach einem der vorangehenden Ansprüche 1 bis 3, **dadurch gekennzeichnet, dass** der Feineinschnitt (2) ein 3-D-Feineinschnitt ist und in Aufsicht ein gerader Feineinschnitt oder ein Feineinschnitt in Wellen-, Treppen- oder Zick-Zack-Form ist.

## Claims

1. Pneumatic vehicle tyre with a tread, which has profile elements (1), wherein at least one profile element (1) is provided with a sipe (2), wherein the sipe (2) has a longitudinal extent with a defined length (10), which is measured between the two edges (5) of the sipe (2), and wherein the sipe (2) extends over the extent of its depth in a radial direction (r) from the tread periphery (4) into the profile element interior (3) as far as the sipe base (6), wherein, to make the stiffness of the profile more uniform over the service life of the pneumatic vehicle tyre, the sipe (2) has in the middle region of its longitudinal extent a material bond (7) to the rubber material surrounding the sipe (2), **characterized in that** this material bond (7) extends from the tread periphery (4) to a depth which lies at least 1 mm above the sipe base and **in that** the length of the material bond (8) becomes less over the extent of its depth.

2. Pneumatic vehicle tyre according to Claim 1, **characterized in that** the length of the material bond (8) at the tread periphery (4) is a maximum of 1/2 × the length of the sipe (10), preferably approximately 1/3 × the length of the sipe (10).

3. Pneumatic vehicle tyre according to one of the preceding claims, **characterized in that** - in plan view of the sipe (2) defined by the extent of its length and depth - the material bond (7) is v-shaped, semicircular or trapezoidal.

4. Pneumatic vehicle tyre according to one of the preceding claims, **characterized in that** the sipe (2) is a 2D sipe and in plan view is a straight sipe or a sipe of a wavy, stepped or zigzagging form.

5. Pneumatic vehicle tyre according to one of the preceding Claims 1 to 3, **characterized in that** the sipe (2) is a 3D sipe and in plan view is a straight sipe or a sipe of a wavy, stepped or zigzagging form.

## Revendications

1. Pneumatique de véhicule, comprenant une bande de roulement présentant des éléments de sculpture (1), dans lequel au moins un élément de sculpture (1) est doté d'une entaille fine (2), l'entaille fine (2) présentant une dimension longitudinale d'une longueur définie (10) mesurée entre les deux bords (5) de l'entaille fine (2), et l'entaille fine (2) s'étendant le long de sa dimension de profondeur dans la direction radiale (r) de la périphérie de bande de roulement (4) vers l'intérieur d'élément de sculpture (3) jusqu'au fond d'entaille fine (6), dans lequel, pour homogénéiser la rigidité de sculpture pendant la durée de vie du pneumatique de véhicule, l'entaille fine (2) présente dans la partie centrale de sa dimension longitudinale une liaison par contact de matière (7) avec la matière caoutchouteuse entourant l'entaille fine (2),
**caractérisé en ce que** cette liaison par contact de matière (7) s'étend de la périphérie de bande de roulement (4) jusqu'à une profondeur située à au moins 1 mm au-dessus du fond d'entaille fine, et **en ce que** la longueur de la liaison par contact de matière (8) diminue le long de sa dimension de profondeur.

2. Pneumatique de véhicule selon la revendication 1, **caractérisé en ce que** la longueur de la liaison par contact de matière (8) est à la périphérie de bande de roulement (4) au maximum 1/2 x la longueur de l'entaille fine (10), de préférence environ 1/3 x la longueur de l'entaille fine (10).

3. Pneumatique de véhicule selon l'une quelconque des revendications précédentes, **caractérisé en ce que** la liaison par contact de matière (7), dans une vue de dessus de l'entaille fine (2) définie par sa dimension de longueur et de profondeur, est en forme de V, en forme de demi-cercle ou en forme de trapèze.

4. Pneumatique de véhicule selon l'une quelconque des revendications précédentes, **caractérisé en ce que** l'entaille fine (2) est une entaille fine 2D et, dans une vue de dessus, est une entaille fine droite ou une entaille fine ondulée, en gradins ou en zigzag.

5. Pneumatique de véhicule selon l'une quelconque des revendications précédentes 1 à 3, **caractérisé en ce que** l'entaille fine (2) est une entaille fine 3D et, dans une vue de dessus, est une entaille fine droite ou une entaille fine ondulée, en gradins ou en zigzag.
